(19)

**Europäisches Patentamt**
**European Patent Office**
**Office européen des brevets**

(11) **EP 1 646 183 B1**

(12) **EUROPEAN PATENT SPECIFICATION**

(45) Date of publication and mention
of the grant of the patent:
**19.12.2007 Bulletin 2007/51**

(51) Int Cl.:
**H04L 12/26** (2006.01)

(21) Application number: **05021480.8**

(22) Date of filing: **30.09.2005**

(54) **Method and apparatus for non-intrusive measurement of delay variation of data traffic on communication networks**

Verfahren und Vorrichtung zur nicht-intrusiven Messung der Verzögerungsänderung von Datenverkehr in Kommunikationsnetzwerken

Méthode et appareil de mesure non-intrusive de variation de retard du trafic de données sur des réseaux de communication

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.10.2004 US 616842 P**
**27.10.2004 US 974023**

(43) Date of publication of application:
**12.04.2006 Bulletin 2006/15**

(73) Proprietor: **Visual Networks Operations, Inc.**
**Rockville MD 20850 (US)**

(72) Inventors:
• **Kannan, Naresh Kumar**
**Rexford, NY 12148 (US)**
• **Kouhsari, Thomas**
**Arlington, VA 22203 (US)**
• **Menzies, James Thomas**
**Montgomery Village, MD 20886 (US)**
• **Nisbet, Thomas R.**
**Ellicott City, MD 21042 (US)**

(74) Representative: **Verscht, Thomas Kurt Albert**
**Agnesstrasse 64**
**80797 München (DE)**

(56) References cited:
**EP-A- 0 786 883          EP-A- 1 130 850**
**WO-A-96/34476**

• **TOYOIZUMI H ED - INSTITUTE OF ELECTRICAL AND ELECTRONICS ENGINEERS: "A simple method of estimating mean delay by counting arrivals and departures" NETWORKING : FOUNDATION FOR THE FUTURE. SAN FRANCISCO, MAR. 28 - APR. 1, 1993, PROCEEDINGS OF THE ANNUAL JOINT CONFERENCE OF THE COMPUTER AND COMMUNICATIONS SOCIETIES (INFOCOM), LOS ALAMITOS, IEEE COMP. SOC. PRESS, US, vol. VOL. 2 CONF. 12, 28 March 1993 (1993-03-28), pages 829-834, XP010032233 ISBN: 0-8186-3580-0**

EP 1 646 183 B1

**Description**

BACKGROUND OF THE INVENTION

Field of the Invention

The present invention relates to methods and apparatus for non-intrusive measurement of delay variation of data traffic on communication networks and, more particularly, to measurement of delay variation of packets or "protocol data units" using real data originating from network users (i.e., not test data) while the communication network is in service.

Description of the Related Art

Packetized data networks are in widespread use transporting mission critical data throughout the world. A typical data transmission system includes a plurality of customer (user) sites and a data packet switching network, which resides between the sites to facilitate communication among the sites via paths through the network.
Packetized data networks typically format data into packets for transmission from one site to another. In particular, the data is partitioned into separate packets at a transmission site, wherein the packets usually include headers containing information relating to packet data and routing. The packets are transmitted to a destination site in accordance with any of several conventional data transmission protocols known in the art (e.g., Asynchronous Transfer Mode (ATM), Frame Relay, High Level Data Link Control (HDLC), X.25, IP, Ethernet, etc.), by which the transmitted data is restored from the packets received at the destination site.
One important application of these networks is the transport of real-time information such as voice and video. The quality of real-time data transmissions depends on the network's ability to deliver data with minimal variation in the packet delay. Typically, when packets of voice or video data are transmitted, a sequence of packets is sent to the network with fairly consistent time differences between successive packets, resulting in a relatively steady stream of packets. This stream of packets must essentially be reconstructed at the destination to accurately reproduce the audio or video signal. Due to conditions on the network, packets may experience different delays before arriving at a destination or may be dropped altogether and not reach the destination. Packets arriving at the destination are buffered to compensate for some degree of delay variation. However, in real-time applications such as voice and video, the output signal must be generated from the data in the packets within a reasonable period of time to avoid perceptible delays in the output audio or video signal. Consequently, packets not received within a predetermined period of time are considered to be dropped, and the output signal is reconstructed without such packets to keep voice calls static free and video running smoothly. Excessive delay variation will cause an unacceptable number of packets to be excluded from the reconstructed real-time output signal resulting in perceptible distortions in the audio or video output signal.
Several methods exist to measure packet delay variation, also known as packet jitter. These methods use additional data included with the real-time data traffic or use real-time data streams that are generated specifically to perform measurements (i.e., test data streams). Both of these approaches have drawbacks. The measurement of jitter may be impacted by modifying the packets themselves. If test traffic is created to simulate voice or video data streams, the test results indicate the behavior of the test packets, which may or may not be the same as actual data traffic. It would be preferable to provide performance measurements that indicate what a customer is actually experiencing rather than what might be experienced if the customer's data were similar to the test data.
Network service providers may wish to offer network performance guarantees, including a guarantee of packet delay variation. In many cases, the providers do not control the entire network. They may offer only the wide-area network connectivity, but the equipment that creates the real-time data streams may be owned by the customer or by another service provider. A single service provider needs a means of guaranteeing the performance of only the portion of the network under its control. Moreover, it would be desirable to demonstrate that packet delay variation requirements are being met by real, user-generated data traffic traversing the network, rather than test data traffic, in a non-intrusive manner that does not require modifying or augmenting the user-generated data traffic.
With respect to the prior art attention is drawn to international patent application WO 96/34476 a method an apparatus for non-intrusive measurement of round trip delay in communications networks is known. This measurement of round-trip delay or travel time in a communications network during in-service operation is accomplished by use of two probes, situated at respective points of interest along the communication network, and a processor. The probes receive identifiable data patterns normally transmitted over the communications network and generate a time stamp when each pattern arrives at or leaves the respective point. Each probe further generates a pattern identifier based on the data in the pattern and stores the identifier and time stamp as a pair in a buffer internal to each probe. Once the internal buffer contents exceed a predetermined amount of data, the processor receives the data from the buffers to locate the departure and arrival time stamps of each pattern traveling between the probe points.
From EP 0 786 883 A1 a method and apparatus for making quality of service measurements on a connection across a network is known. The quality of service provided by a connection in transferring data units between first and second points across a network is measured by a method involving monitoring the normal connection traffic at the first and second points to detect the occurrence of the same events at each point. An event is deemed to have occurred at a monitored network point when a predetermined set of criteria concerning one or more data units is satisfied by the connection data-unit traffic at the point concerned. Whenever an event is detected, an event report or "digest" is generated, this digest including a signature based on the contents of the data units giving rise to the event. Digests from both monitored network points are sent to a correlation unit where digests relating to the occurrence of the same event at the two network points are matched up. The matched digest pairs are then passed to a measurement unit to derive quality of service measurements.

From EP 1 130 850 A2 a method and apparatus for non-intrusive measurement of end-to-end properties of a network flow using a passive approach is known. Data units at the input of a network path are sampled by an ingress monitor, which identifies each data unit with a unique signature and generates measurement data. The same data units at the output of the network path are sampled by an egress monitor, which identifies each data unit with a unique signature and generates measurement data. A data correlator pulls lists of entries from the ingress and egress monitors, each entry having the unique signature and the measurement data for one of the data units, correlates the lists to find entries from the lists that have the same unique signature, and determines from the measurement data for the data units from the two lists that have the same unique signature the end-to-end properties of the network flow.

From TOYOIZUMI H ED - INSTITUTE OF ELECTRICAL AND ELECTRONICS ENGINEERS: "A simple method of estimating mean delay by counting arrivals and departures" NETWORKING: FOUNDATION FOR THE FUTURE. SAN FRANCISCO, MAR. 28 - APR. 1, 1993, PROCEEDINGS OF THE ANNUAL JOINT CONFERENCE OF THE COMPUTER AND COMMUNICATIONS SOCIETIES (INFOCOM), LOS ALAMITOS, IEEE COMP. SOC. PRESS, US, vol. VOL. 2 CONF. 12, 28 March 1993 (1993-03-28), pages 829-834, XP010032233 ISBN: 0-8186-3580-0 a simple method of estimating mean delay (sojourn time in queueing terminology) of a call-processing processor in communication switching systems by observing actual behaviour of the systems in known. In this method counters for the number of arrivals and departures are used.

SUMMARY OF THE INVENTTON

The present invention relates to a method of measuring delay variation of data traffic in accordance with claim 1. Further, the present invention relates to an apparatus for measuring delay variation of data traffic in accordance with claim 12.

Preferred embodiments are disclosed in the dependent claims.

In accordance with one aspect of the present invention, a method of measuring delay variation of data traffic (protocol data units (PDUs)) traversing at least first and second points on a communication network includes: generating first PDU identifiers of PDUs observed at the first point and generating corresponding first timestamps indicating observation times of the PDUs at the first point; generating second PDU identifiers of PDUs observed at the second point and generating corresponding second timestamps indicating observation times of the PDUs at the second point; and computing, from first and second timestamps having matching PDU identifiers, a measure of variation indicating a delay variation of PDUs between the first and second points.

In accordance with another aspect of the present invention, an apparatus for measuring delay variation of data traffic (PDUs) traversing at least first and second points on a communication network includes: a first probe generating first PDU identifiers of PDUs observed at the first point and corresponding first timestamps indicating observation times of the PDUs at the first point; a second probe generating second PDU identifiers of PDUs observed at the second point and corresponding second timestamps indicating observation times of the PDUs at the second point; and a processor computing from first and second timestamps having matching PDU identifiers, a measure of variation indicating a delay variation of PDUs between the first and second points. The processor can be in either of the probes, both probes can possess such processors, or the processor can be in a separate device, such as a management station.

The computation of the measure of variation can include computing differences between first time differences of first timestamps and second time differences of corresponding second timestamps having matching PDU identifiers, and computing the measure of variation from the differences between the first time differences and the second time differences. The measure of variation can be, for example, the statistical variance or standard deviation. The reference time frames used by the two probes to generate timestamps need not be synchronized to perform the measurements, although the methodology works equally well if synchronization is present.

The data traffic (PDUs) used to measure delay variation is preferably actual data traffic generated by a user or customer for some purpose other than to measure delay variation, and the technique does not require the probes to alter the PDUs or introduce test PDUs into data traffic for the purpose of measuring the test PDUs.

The PDU identifiers are computed based on characteristics of the PDUs that are invariant as the PDUs traverse the network between the first and second points, such as attributes or contents of the PDU. In this manner, the same PDU identifiers can be generated from the same PDU at both probes. Common PDUs observed at both the first and second probes are identified by finding matching first and second PDU identifiers and generating a set of the first timestamps and a set of the second timestamps having matching PDU identifiers. The measure of variation is computed using the first and second timestamps from the common PDUs, and non-matching PDU identifiers are discarded.

The first probe can initiate and terminate a measurement period for observing PDUs by inserting marker signals into data traffic. All or a subset of PDUs observed during the measurement period can be used to compute the measure of delay variation. The measurement of delay variation can be performed for data traffic traveling in both directions on the network between the two probes. Further, additional probes can be included at intermediate points on the route between two probes, permitting measurement of delay variation over segments of the network between two end points.

The above and still further features and advantages of the present invention will become apparent upon consideration of the following definitions, descriptions and descriptive figures of specific embodiments thereof wherein like reference numerals in the various figures are utilized to designate like components. While these descriptions go into specific details of the invention, it should be understood that variations may and do exist and would be apparent to those skilled in the art based on the descriptions herein.

BRIEF DESCRIPTION OF THE DRAWINGS

Fig. 1 is a functional block diagram of a data transmission system including probes located at different points in the system to measure delay variation of data traffic on a communication network.

Fig. 2 is a functional block diagram of a probe employed in the system of Fig. 1.

Fig. 3 is a functional flow chart indicating operations performed to determine delay variation of data traffic on a communication network.

Fig. 4 is a functional block diagram of three probes located at different points, where one of the probes is at an intermediate point traversed by data traffic being transported between the two other points.

DETAILED DESCRIPTION

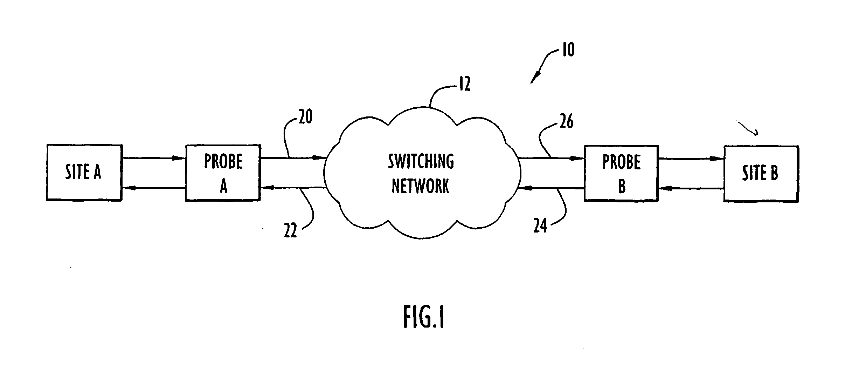

The following detailed explanations of Figs. 1-4 and of the exemplary embodiments reveal the methods and apparatus of the present invention. A system for monitoring performance for data communication networks is illustrated in Fig. 1. Specifically, an exemplary data transmission system 10 includes two sites (A and B) and a packet switching network 12 to facilitate communications between the sites. Site A is connected to network 12 via a probe A, while site B is connected to network 12 via another probe B. Site A is connected to the network by communication lines 20 and 22, which are accessible to probe A, and site B is connected to the network by communication lines 24 and 26, which are accessible to probe B. The data transmission system 10 can include conventional communications line types, for example, T3, OC-3, North American T1 (1.544 Mbits/second), CCITT (variable rate), 56K or 64K North American Digital Dataphone Service (DDS), Ethernet, and a variety of data communications connections, such as V.35, RS-449, EIA 530, X.21 and RS-232. Sites A and B are each capable of transmitting and receiving data packets in various protocols utilized by the communication lines, such as Asynchronous Transfer Mode (ATM), Frame Relay, High Level Data Link Control (HDLC) and X.25, IP, Ethernet, etc. Each line 20, 22, 24, 26 represents a respective transmission direction as indicated by the arrows. For example, the arrows on communication lines 20 and 22 represent transmissions from site A to the network and from the network to site A, respectively, while the arrows on communication lines 24 and 26 represent transmissions from site B to the network and from the network to site B, respectively.

Generally, site A and site B utilize switching network 12 to communicate with each other, wherein each site is connected to switching network 12 that provides paths between the sites. For illustrative purposes, only two sites (A and B) are shown in Fig. 1. However, it will be understood that the data communication system can include numerous sites, wherein each site is generally connected to multiple other sites over corresponding transmission circuits.

As used herein, the term "packet" (e.g., as used in "packetized switching network" or "packet delay variation") does not imply any particular transmission protocol and can refer to units or segments of data in a system using, for example, any one or combination of the above-listed data transmission protocols (or other protocols). However, since the term "packet" is often associated with only certain data transmission protocols, to avoid any suggestion that the system of the present invention is limited to any particular data transmission protocols, the term "protocol data unit" (PDU) will be used herein to refer generically to the unit of data being transported by the communication network, including any discrete packaging of information. Thus, for example, a PDU can be carried on a frame in the frame relay protocol, a related set of cells in the ATM protocol, a packet in an IP protocol, etc.

As shown in Fig. 1, probes A and B are respectively disposed between switching network 12 and sites A and B. Probes A and B can be located at sites A and B, at any point between switching network 12 and sites A and B, or at points within the switching network itself. The placement of the probes depends at least in part on the portion of the system or network over which a network service provider or other party wishes to monitor delay variation of data traffic. Typically, when service providers and customers enter into a service level agreement, the service provider will want any performance commitments to be limited to equipment or portions of the network over which it has control. The service provider does not want to be responsible for performance problems or degradation caused by end-site equipment or portions of the network not owed or managed by the service provider. On the other hand, a customer may desire to have probes relatively close to the actual destinations to assess overall end-to-end performance. Further, a customer or service provider may wish to have probes at the edges of the network and at intermediate points in the network to help pinpoint specific segments of the network or equipment causing a degradation in performance.

In general, the probes can comprise standalone hardware/software devices or software and/or hardware added to network equipment such as PCs, routers, CSU/DSUs (channel service unit/data service unit), FRADS, voice switches, phones, etc. Software embedded in the probes can collect network performance data for detailed analysis and report generation relating to any of a variety of performance metrics. By way of non-limiting example, a probe can be a CSU/DSU that operates both as standard CSU/DSU and as managed devices capable of monitoring and inserting network management traffic; an inline device residing between a DSU and router, which monitors network traffic and inserts network management traffic; or a passive probe that monitors network traffic only.

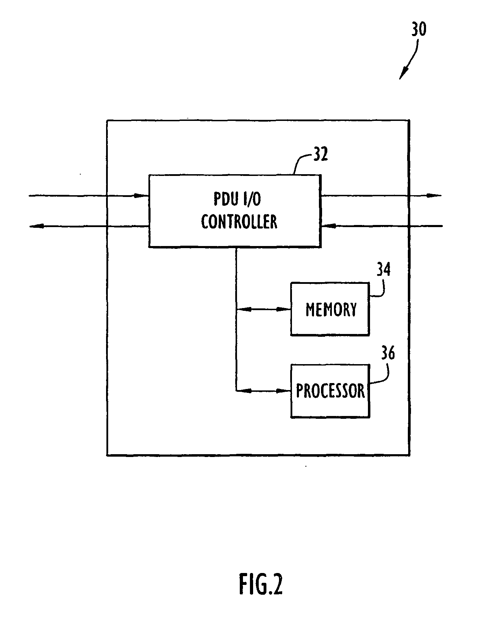

A functional block diagram of a probe 30 employed in the system of Fig. 1 is shown in Fig. 2. The architecture depicted in Fig. 2 is a conceptual diagram illustrating major functional units and does not necessarily illustrate physical relationships or specific physical devices within the probe. The probe configuration shown in Fig. 2 is capable of inserting PDUs into the data traffic. This capability permits the probe to initiate testing periods and to forward test results to other probes or processors at the conclusion of a test, as will be described in greater detail. Notwithstanding the capability of the probes to insert PDUs into data traffic, an important aspect of the present invention is that the probes measure PDU delay variation using actual PDU data traffic generated by the customer or end-user equipment without altering or augmenting the PDUs and without generating or inserting any test PDUs into the data traffic for the purpose of measuring delay variation. With this mind, in accordance with another approach, the probes may be entirely passive devices incapable of inserting any PDUs into data traffic. In this case, the probes can supply test data to a back end system for processing, and coordination of testing periods is handled by other means, as described below. Passive probes can also forward measurement data to each other via an out of band channel or through another link, in which case, passive probes can directly coordinate testing periods and compute delay variation metrics.

The probe 30 shown in Fig. 2 captures, processes and retransmits PDUs being sent between sites via the network 12 and inserts inter-probe message PDUs into the data traffic as needed. More specifically, the probe captures PDUs traversing the network in both directions and retransmits the PDUs toward the intended destination without altering the PDUs. In functional terms, the probe includes at least a PDU input/output (I/O) controller 32, a memory 34, and a processor 36. Each of these functional elements may comprise any combination of hardware components and software modules. PDU I/O controller 32 is essentially responsible for capturing and retransmitting PDUs arriving at the probe, supplying PDU information (e.g., some portion or the entire contents of PDUs) to memory 34 and processor 36, and for inserting test management PDUs (e.g., to initiate and terminate testing periods) into data traffic to communicate with other probes or a back end management system. Memory 34 can be used to store the PDU information received from PDU I/O controller 32 and to store test information from processor 36 or PDU I/O controller 32. Processor 36 can be used to generate test data as PDUs are captured by the probe and to compute delay variation metrics based on test data generated during a testing period.

Management software is used to display the results of the delay variation testing. Depending on the configuration of the probes, the management software may be embedded in the probes themselves or in equipment that includes the probes, or the management software may reside on a back end processing system that receives test results and/or raw test data from the probes.

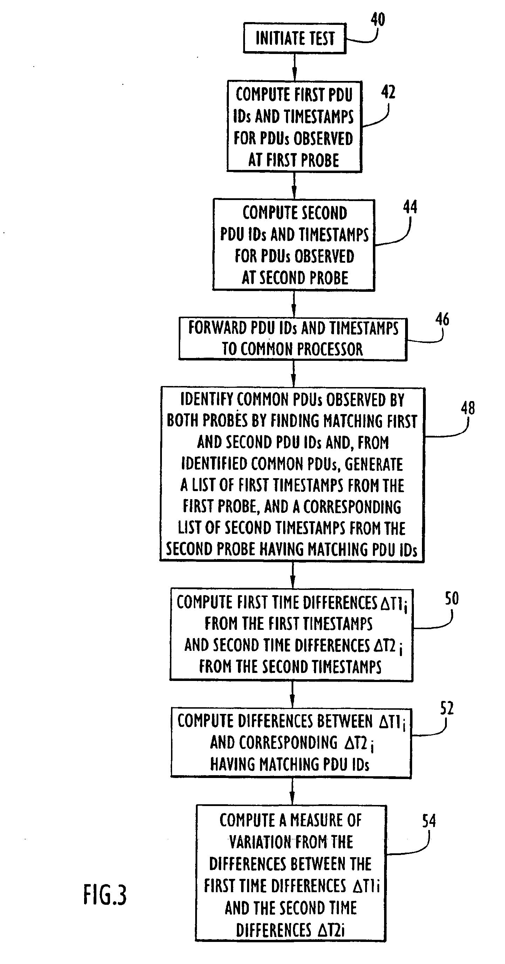

Operation of the probes to measure delay variation (jitter) of data traffic is described in connection with the flow diagram of Fig. 3. In operation 40, a test is initiated, demarking a measurement period over which data will be collected to measure jitter between points on the network. For example, in the configuration shown in Fig. 1, the test can be initiated by probe A inserting a marker signal (e.g., a marker PDU) into the data traffic bound for probe B. Once probe A has initiated the test, probe A begins collecting information on PDUs traversing the network from probe A to probe B. Upon receiving the marker signal, probe B also begins collecting information on these PDUs, such that both probes collect information about the same PDUs during the measurement period. The information collected using this scheme would support measurement of jitter for data traffic traversing the network from probe A to B (i.e., a one-way measurement).

To measure jitter in both directions, which would be particularly beneficial in contexts such as two-way voice communications and video conferencing, information can be collected for data traffic traversing the network from probe B to probe A as well. In this case, probe B can initiate a test by sending a marker signal into the data traffic bound for probe A. Once probe B has initiated the test, probe B begins collecting information on PDUs traversing the network from probe B to probe A. Upon receiving the marker signal from probe B, probe A also begins collecting information on these PDUs. The duration of the measurement period or extent of the test can be controlled in any of a number of ways. For example, information can be collected for a predetermined period of time, for a predetermined number of PDUs, or until an end-of-test marker packet is sent by the initiating probe. For simplicity, the operations shown in Fig. 3 relate to computation of jitter in one-direction (i.e., for data traversing the network from a first probe to a second probe). However, it will be understood that jitter can be determined for data traffic in both directions by applying these operations to data traffic traversing the network in both directions.

The foregoing approach requires at least one of the probes to insert a marker signal into the data traffic, which necessitates that the probes have the capability to insert signals into data traffic. However, other techniques can be used to demark a measurement period that would not necessarily require this capability and could be performed by purely passive probes. For example, the probes could use an existing packet in the network having characteristics known to both probes to initiate each test and beginning of the measurement periods at each probe. According to another approach, the probes could initiate the test based on a specific time event. Further, the probes could collect information substantially continuously and employ somewhat more involved logic to determine the correspondence between data collected by probes A and B.

Referring again to Fig. 3, in operation 42, a first probe (e.g., probe A in Fig. 1) observes incoming PDUs that are bound for probe B, meaning that these PDUs will pass through probe B en route to an ultimate destination (probe B would not typically be the final destination for such data traffic). In other words, the first probe examines PDUs traversing the network from the first probe to the second probe. Again, these PDUs constitute actual data traffic generated, for example, by end-user or customer equipment or applications running thereon (e.g., audio data such as voice data, video data, or other types of data).

In the probe configuration shown in Fig. 2, an arriving PDU is essentially captured by PDU I/O controller 32 and then retransmitted to the toward the PDU's destination. Upon capturing the PDU, a PDU identifier is generated either by processor 36 or PDU I/O controller 32 based on characteristics of the PDU and stored in memory 34 along with a corresponding timestamp indicating the time the PDU was observed by the probe (e.g., the PDU's time of arrival at the probe) in a local time reference frame (e.g., using a local clock). In the case of a passive probe, the data traffic is merely observed and is not captured and retransmitted. As used herein the term "characteristics" refers generally to any attributes of the PDU (e.g., length, format, structure, existence of particular fields, etc.) or contents of the PDU (e.g., data in particular fields, identifiers, flags, etc.) or combinations of both attributes and contents. The PDU identifier is essentially a multi-bit word that can be used to identify a particular PDU among a set of such PDUs at both the first and second probe. To that end, the PDU identifier should generally meet two criteria. First, the PDU identifier should be constructed from the PDU characteristics (attributes and/or contents) such that there is a low probability that other PDUs observed in the same measurement period have the same PDU identifier (i.e., the PDU identifier should be reasonably unique to that PDU within the data stream). Second the characteristics used to generate the PDU must be invariant as the PDU traverses the network from the first probe to the second probe so that both the first and second probes will generate the same identical PDU identifier upon observing the same PDU.

Substantially unique PDU identifiers can be generated in virtually an unlimited number of ways by operating on one or more invariant characteristics of a PDU, and the invention is not limited to the use of any particular combination of characteristics or operations thereon to generate PDU identifiers. By way of non-limiting example, a number of identification fields contained within protocol headers can be used in combination with other data in the PDU to generate substantially unique PDU identifiers. Specifically, for RTP packets, one possibility is to generate a packet identifier using the IP Identification field, the RTP Sequence Number field, the RTP Synchronization Source Identifier (SSRC) field, and additional octets at a fixed position in the RTP payload. For other types of packets, another example is to use the IP Identification field in combination with additional octets at fixed positions in the IP payload.

Once the PDUs are transported across the network and arrive at the second probe, the second probe generates PDU identifiers using the same technique as the first probe and stores the PDU identifiers along with corresponding timestamps indicating the observation times of the PDUs at the second probe (operation 44 in Fig. 3). For the PDUs arriving at the second probe that are being examined for the jitter measurement, the PDU identifiers should match the PDU identifiers generated by the first probe for those PDUs. The timestamps generated at the second probe do not need to be synchronized with the timestamps generated at the first probe. In other words, local clocks or oscillators maintaining a local time reference frame can be used in each probe to generate the timestamps without regard to the time reference frame of the other probe. This is because the timestamps from the first probe are not directly compared to the timestamps from the second probe in the computation of jitter, as will become evident. Nevertheless, the technique of the present invention is equally applicable where the probes are synchronized.

The frequency with which measurements of jitter (delay variation) are made can be according to any of a variety of schemes. Some example include determining the delay variation metric periodically, upon receipt of a predetermined number of PDUs, upon occurrence of a particular event, on demand, or in accordance with a test schedule (e.g., quasi-randomly). By way of non-limiting example, the first probe can terminate a measurement period by sending another marker signal demarcating the end of the data traffic to be used to compute jitter after a predetermined time period or after a predetermined number of PDUs has been observed. The measurement of delay variation can be performed using all PDUs observed between two probes during a measurement period, or the probes can apply filtering to measure delay variation using only a subset of the traffic. Useful subsets might include, for example, packet type, class of service, or source and destination network addresses.

The PDU identifiers and timestamps from both probes must be brought together (operation 46 in Fig. 3) to perform the computations necessary to determine the delay variation between the first and second probes. For data traffic traversing the network from probe A to probe B, the effects of jitter would be observable at probe B (i.e., at the receiving end). Consequently, a sensible approach would be to retrieve the measurement data (PDU identifiers and timestamps) stored in probe A, forward that measurement data to probe B, and compute a measure of delay variation in probe B. This can be accomplished, for example, by sending one or more PDUs from the probe A to probe B containing the measurement data at the end of the measurement period. The measurement data could be sent with a PDU demarking the end of the measurement period or in a separate PDU. Likewise, for data traversing the network from probe B to probe A, probe B can forward measurement data to probe A, so that probe A can compute a delay variation metric. More generally, either probe can compute either delay variation by forwarding the corresponding measurement data from the other probe. Another approach is to compute a delay variation metric in a back end system (e.g., a management station) by forwarding stored measurement data from both probes to a common management processor. This approach could be used with passive probes that do not supply measurement data to each other. Note, however, that passive probes may have the capability to communicate out of band or via another link; thus, even passive probes may exchange measurement data and perform computation of a measure of delay variation.

To assist in explaining an exemplary methodology for computing a measure of delay variation, a simplified example computation is presented in connection with Tables 1 - 4. Referring again to Fig. 3, in operation 48, the probe or management agent that has received the sets of PDU identifiers and timestamps from the two probes uses the PDU identifiers from both sets of data to identify common PDUs in the two data streams, i.e., PDUs that were observed by both probes. Specifically, the processor compares first PDU identifiers from the first probe with second PDU identifier from the second probe to find matching (identical) first and second PDU identifiers. For the PDUs identified as common to both probes, a list of the timestamps from the first probe and a corresponding list of timestamps from the second probe having matching PDU identifiers are generated. Table 1 illustrates an example of five PDUs having matching PDU identifiers from the first and second probes and the lists of corresponding timestamps from the two probes. Only those PDUs having matching PDU identifiers from both probes are used in the computation of the delay variation metric. The lists of PDU identifiers and timestamps excludes PDU identifiers and corresponding timestamps not found to have matching PDU identifiers from both probes (i.e., those PDU identifiers contained in the measurement data from only one of the probe but not the other). Non-matched PDU identifiers can result, for example, from PDUs being dropped by the network, such that some PDUs observed at the first probe are not received or observed at the second probe. The process of comparing the two sets of PDU identifiers can be used to identify the number of PDUs dropped, delivered out of order, or excessively delayed, which can be reported separately as part of an overall evaluation of the network performance.

Table 1 Timestamps and PDU Identifier values for two probes.

| Probe 1 | | | Probe 2 | |
|---------|------|---|---------|------|
| ID | Time | | ID | Time |
| 18f8 | 020010 | | 18f8 | 150055 |
| 7c91 | 020020 | | 7c91 | 150068 |
| 6bbe | 020030 | | 6bbe | 150075 |
| 4708 | 020040 | | 4708 | 150089 |
| 1d43 | 020050 | | 1d43 | 150098 |

Once the common PDUs have been identified, and the corresponding lists of first and second timestamps have been constructed, in operation 50, for each pair of consecutive PDUs in each list, the time difference ($\Delta T$) is calculated as

$$\Delta T_i = \text{timestamp}_i - \text{timestamp}_{i-1} \qquad (1)$$

In the case where the first probe is at or near the originating end of the network, each of the delta times in the first set ($\Delta T1_i$ = timestamp1$_i$ - timestamp1$_{i-1}$) essentially indicates the elapsed time between two transmitted PDUs, and where the second probe is at or near the destination end of the network, each of the delta times in the second set ($\Delta T2_i$ = timestamp2$_i$ - timestamp2$_{i-1}$) essentially indicates the elapsed time between two received PDUs. Table 2 illustrates the computation of the time differences for the timestamps from the first and second probe listed in Table 1.

Table 2 Computation of Time Differences for First Probe and for Second Probe

| Probe 1 | | | | Probe 2 | | |
|---|---|---|---|---|---|---|
| ID | Time | $\Delta$T1 | | ID | Time | $\Delta$T2 |
| 18f8 | 020010 | | | 18f8 | 150055 | |
| 7c91 | 020020 | 10 | | 7c91 | 150068 | 13 |
| 6bbe | 020030 | 10 | | 6bbe | 150075 | 8 |
| 4708 | 020040 | 10 | | 4708 | 150089 | 14 |
| 1d43 | 020050 | 10 | | 1d43 | 150098 | 9 |

In operation 52, for corresponding PDUs in the two lists, the differences (Diff$_i$) between the first time difference $\Delta T1_i$ and corresponding second time difference $\Delta T2_i$ are calculated by:

$$\text{Diff}_i = \Delta T2_i - \Delta T1_i \qquad\qquad (2)$$

Since a measure of variation is ultimately being computed, value of the differences between the delta times could alternatively be computed with the opposite sign (i.e., Diff$_i$ = $\Delta T1_i$ - $\Delta T2_i$) without affecting the ultimate result. Table 3 shows the computation of the differences of the delta times for the example in the previous tables. Note that because these differences are taken between time differences, the lack of synchronization between the two probes has no impact on the computation and can be ignored. Note further that, by combining equations (1) and (2) it can be seen that:

$$\text{Diff}_i = \text{timestamp2}_i - \text{timestamp2}_{i-1} - (\text{timestamp1}_i - \text{timestamp1}_{i-1}) \qquad\qquad (3)$$

Consequently, the same result can be reached by calculating the difference between corresponding timestamps from the two probes and then computing the differences between consecutive ones of these delta values. In other words, the invention is not limited to arrive at difference values by the particular sequence of computations shown in the foregoing example.

Table 3 Computation of Differences Between First Probe Time Differences and Corresponding Second Probe Time Differences

| Probe 1 | | | | Probe 2 | | | Diff$_i$ |
|---|---|---|---|---|---|---|---|
| ID | Time | $\Delta$T1 | | ID | Time | $\Delta$T2 | $\Delta$T2-$\Delta$T1 |
| 18f8 | 020010 | | | 18f8 | 150055 | | |
| 7c91 | 020020 | 10 | | 7c91 | 150068 | 13 | 3 |
| 6bbe | 020030 | 10 | | 6bbe | 150075 | 8 | -2 |
| 4708 | 020040 | 10 | | 4708 | 150089 | 14 | 4 |
| 1d43 | 020050 | 10 | | 1d43 | 150098 | 9 | -1 |

Referring once again to Fig. 3, the differences computed in operation 52 can be used in operation 54 to compute a measure of delay variation of the data traffic flowing between the first and second probes. The variation in these differences indicates the delay variation (jitter) of the PDUs. The measure of delay variation can be virtually any measure of variation including, but not limited to: statistical variance, standard deviation, average deviation, an indication of minimum and maximum observed delay values or their difference (range), quartile range (third quartile - first quartile), or other quartile or percentile indicators, or the frequency with which (or number of occurrences) the delay differences fall into different ranges of values.

In accordance with one example, the well-known sample variance $s^2$ (where $s$ is the standard deviation) can be used to compute a measure of delay variation. The sample variance $s^2$ of a set of $n$ measurements $x_1$, $x_2$, ..., $x_n$ is computed as

$$s^2 = \frac{\sum_{i=1}^{n}(x_i - \bar{x})^2}{n-1} \tag{4}$$

where $\bar{x}$ is the mean of the $n$ measurements. In the example shown in Table 3, the mean $\bar{x}$ of the four values $\text{Diff}_i$ = (3-2+4-1)/4 = 1. Table 4 illustrates the computation of $(\text{Diff}_i - \bar{x})^2$ for the $\text{Diff}_i$ values in Table 3.

Table 4 Computation of $(\text{Diff}_i - \bar{x})^2$

| $\text{Diff}_i$ | $\text{Diff}_i - \bar{x}$ | $(\text{Diff}_i - \bar{x})^2$ |
|---|---|---|
| 3 | 2 | 4 |
| -2 | -3 | 9 |
| 4 | 3 | 9 |
| -1 | -2 | 4 |

As given by equation (4), the variance is the sum of $(\text{Diff}_i - \bar{x})^2$, for $i$ = 1 to $n$, divided by $n$-1. In this example, (4 + 9 + 9 + 4) / 3 = 8.666. The square root of this value would represent the standard deviation, which could also be used as a measure of variation.

Once the measure of delay variation has been computed, the measurement can be supplied to a management system for inclusion in graphical displays of network performance and for report generation. Optionally, the measure of delay variation can be used to trigger an alarm or to provide notice to an administrator that the delay variation is at an unacceptable level. For example, any of a variety schemes involving threshold levels or the like can be used to determine whether the measured delay variation is excessive.

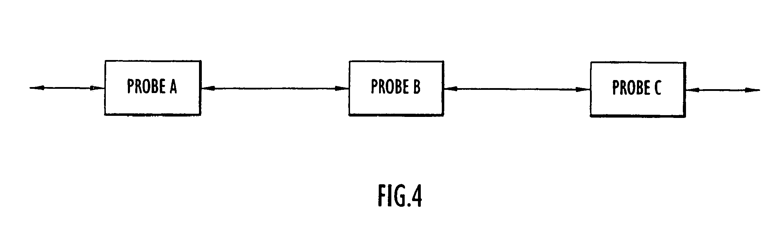

While the arrangement shown in Fig. 1 involves two probes along the route of PDUs traversing the network, the invention encompasses inclusion of additional probes at intermediate points along the route of PDUs within the network. As shown in Fig. 4, a probe B can be located at a point between probes A and C in the network. The intermediate probe B permits sectionalized measurement of data traffic delay variation, from point A to point B, and from point B to point C. Intermediate probe B shown in Fig. 4 operates in essentially the same manner as end probes A and C by non-intrusively observing PDUs transported between probes A and C in both directions and generating and storing PDU identifiers and timestamps. If probes A and C exchange measurement data at the end of a measurement period, probe B can receive this measurement data and compute certain delay variations without communicating directly with probes A and C. Specifically, upon receiving measurement data sent by probe A to probe C relating to PDUs traversing the network from probe A to probe C, probe B can compute a measure of delay variation from A to B for data traffic traversing the network in that direction. Likewise, upon receiving measurement data sent by probe C to probe A relating to PDUs traversing the network from probe C to probe A, probe B can compute a measure of delay variation from C to B for data traffic traversing the network in that direction. More generally, measurement data collected at probe B can be forwarded to a common processor (e.g., probe A, probe C, or a management station) to compute a measure of delay variation over each segment of the network (e.g., A to B and B to C in both directions). In this manner, if poor performance is observed at the receiving end of the network, a network administrator can more easily pinpoint which segment of the network includes the source of the problem.

It will be appreciated that the embodiments described above and illustrated in the drawings represent only a few of the many ways of utilizing the principles of the present invention to measure data traffic delay variation (jitter) in a communication network. For example, while the invention has particular advantages in applications involving real time or near real time presentation of information, such as audio and video applications, the invention is not limited to measurement of data traffic jitter in any particular context and applies equally to all types of data and applications.

The principles of the present invention may be applied not only to packetized communications networks (e.g. Frame Relay, SMDS, ATM, IP, etc.), but also to any communications network wherein the data transmitted and received is substantially unaltered by the communications network itself and contains identifiable patterns (e.g. framing bits, synchronization of words or other unique data patterns) in the data that permit the identification of unique portions of the data stream. Thus the principles of the present invention could be applied, for example, to measure the jitter in a non-packetized leased-line network. In this respect, as used herein, the term PDU encompasses virtually any identifiable portion of a data stream from which the same identifier can be generated at two points in a network.

Although the preferred embodiment discloses a particular functional representation of the probes, any data gathering devices capable of capturing and recording the time of data reception and transmission can be used according to the principles of the present invention. Further, the present invention is not limited to computing PDU identifiers in any particular manner, but rather any method of uniquely identifying data patterns (e.g. special headers, coding/encryption, etc.) may be implemented according to the present invention.

From the foregoing description it will be appreciated that the invention makes available a novel method and apparatus for measuring the delay variation of data traffic in communication networks during in-service operation by employing probes to capture departure and arrival times of PDUs between points of interest, and matching the times to respective identifiable data patterns in order to compute delay variation metrics.

The invention offers several advantages over existing methods. Delay variation of data traffic can be measured non-intrusively for actual data traffic, rather than for artificially generated test traffic. Moreover, the measurement does not require any modifications to the real-time data packets and does not require synchronized clocks on the probes. Further, the measurement of delay variation is not protocol-specific and can be used on any network that breaks traffic into discrete units of data like frame relay frames, ATM cells, IP packets, etc.

The delay variation metric can be measured between any two service demarcations; the measurement does not need to start at the point where the traffic originates and terminates. Moreover, the network can be subdivided, such that if traffic flows from points A to C through another point B, measurements can be performed not only from point A to point C but also from point A to point B and from point B to point C.

Having described preferred embodiments of new and improved methods and apparatus for non-intrusive measurement of delay variation of data traffic on communication networks, it is believed that other modifications, variations and changes will be suggested to those skilled in the art in view of the teachings set forth herein. It is therefore to be understood that all such variations, modifications and changes are believed to fall within the scope of the present invention as defined by the appended claims. Although specific terms are employed herein, they are used in a generic and descriptive sense only and not for purposes of limitation.

**Claims**

1. A method of measuring delay variation of data traffic traversing at least first and second points on a communication network (12), the data traffic comprising protocol data units PDUs, the method comprising:

   a) generating first PDU identifiers of PDUs observed at the first point and generating corresponding first timestamps indicating observation times of the PDUs at the first point;
   b) generating second PDU identifiers of PDUs observed at the second point and generating corresponding second timestamps indicating observation times of the PDUs at the second point; and
   c) computing, from first and second timestamps having matching PDU identifiers, a measure of variation indicating a delay variation of PDUs between the first and second points,
   **characterized in that** step c) further comprises

      c1) computing differences between first time differences of first timestamps and second time differences of corresponding second timestamps having matching PDU identifiers; and
      c2) computing the measure of variation from the differences between the first time differences and the second time differences.

2. The method of claim 1, wherein the PDUs comprise user data traffic not generated for measuring delay variation.

3. The method of claim 1 or 2, wherein the method does not involve altering the PDUs

4. The method of any of claims 1 to 3, wherein the first and second PDU identifiers are computed based on characteristics of the PDUs that are invariant as the PDUs traverse the network (12) between the first and second points.

**5.** The method of any of claims 1 to 4, further comprising:

d) identifying common PDUs observed at the first and second points by finding matching first and second PDU identifiers and generating a set of the first timestamps and a set of the second timestamps having matching PDU identifiers, wherein c) is performed with first and second timestamps from the common PDUs, respectively.

**6.** The method of any of claims 1 to 5, further comprising:

d) initiating a measurement period for observing PDUs by inserting a marker signal in data traffic at the first point.

**7.** The method of any of claims 1 to 6, wherein a time reference frame of the first timestamps is not synchronized with a time reference frame of the second timestamps.

**8.** The method of any of claims 1 to 7 wherein the PDUs are a subset of all PDUs observed at the first and second points.

**9.** The method of any of claims 1 to 8, wherein the measure of variation is a variance or standard deviation.

**10.** The method of any of claims 1 to 9, wherein a) - c) are performed for PDUs traversing the network (12) from the first and second points in both directions.

**11.** The method of any of claims 1 to 10, wherein the PDUs traverse a third point between the first and second points, the method further comprising:

d) generating third PDU identifiers of PDUs observed at the third point and generating corresponding third timestamps indicating observation times of the PDUs at the third point; and
e) computing, from first, second, and third timestamps having matching PDU identifiers, a measure of variation indicating a delay variation of PDUs between pairs of the first, second, and third points.

**12.** An apparatus for measuring delay variation of data traffic traversing at least first and second points on a communication network (12), the data traffic comprising protocol data units, PDUs, the apparatus comprising:

a first probe (A) configured to generate first PDU identifiers of PDUs observed at the first point and to generate corresponding first timestamps indicating observation times of the PDUs at the first point;
a second probe (B) configured to generate second PDU identifiers of PDUs observed at the second point and to generate corresponding second timestamps indicating observation times of the PDUs at the second point; and
a processor (36) configured to compute, from first and second timestamps having matching PDU identifiers, a measure of variation indicating a delay variation of PDUs between the first and second points,
processor (36) is configured to compute differences between **characterized in that** :

said first time differences of first timestamps and second time differences of corresponding second timestamps having matching PDU identifiers, and is further configured to compute the measure of variation from the differences between the first time differences and the second time differences.

**13.** The apparatus of claim 12, wherein the first probe (A) includes the processor (36).

**14.** The apparatus of claim 12 or 13, wherein the second probe (B) includes the processor (26).

**15.** The apparatus of any of claims 12 to 14, wherein the processor (36) is within a management device other than the first and second probe (A, B).

**16.** The apparatus of any of claims 12 to 15, wherein the PDUs comprise user data traffic not generated for measuring delay variation.

**17.** The apparatus of any of claims 12 to 16, wherein the first and second probes (A,B) are configured to not alter the PDUs.

**18.** The apparatus of any of claims 12 to 17, wherein the first and second probes (A, B) are configured to generate the first and second PDU identifiers based on characteristics of the PDUs that are invariant as the PDUs traverse the network (12) between the first and second points.

**19.** The apparatus of any of claims 12 to 18, wherein the processor is configured to identify common PDUs observed by the first and second probes (A,B) by finding matching first and second PDU identifiers and is further configured to generate a set of the first timestamps and a set of the second timestamps having matching PDU identifiers, difference computations are performed with first and second timestamps from the common PDUs, respectively.

**20.** The apparatus of any of claims 12 to 19, wherein the first probe (A) is configured to initiate a measurement period for observing PDUs by inserting a marker signal in data traffic bound for the second probe (B).

**21.** The apparatus of any of claims 12 to 20, wherein the first probe (A) is configured to generate the first timestamps using a first time reference frame and the second probe (B) is configured to generate the second timestamps using a second time reference frame that is not synchronized with the first time reference frame.

**22.** The apparatus of any of claims 12 to 21, wherein the PDUs are a subset of all PDUs observed by the first and second probes (A, B).

**23.** The apparatus of any of claims 12 to 22, wherein the measure of variation is a variance or standard deviation.

**24.** The apparatus of any of claims 12 to 23, wherein the first and second probes (A,B) are configured to compute the measure of variation for data traffic transported in at least one direction through the network (12).

**25.** The apparatus of any of claims 12 to 24, further comprising:

a third probe at a third point between the first and second probes (A,B) in the network (12), the third probe being configured to generate third PDU identifiers of PDUs observed at the third point and to generate corresponding third timestamps indicating observation times of the PDUs at the third point;

wherein the processor is configured to compute a measure of variation, from first, second, and third timestamps having matching PDU identifiers, a measure of variation indicating a delay variation of PDUs between pairs of the first, second, and third points.

**Patentansprüche**

**1.** Ein Verfahren zum Messen von Verzögerungsschwankung von Datenverkehr, der wenigstens erste und zweite Punkte auf einem Kommunikationsnetzwerk (12) durchläuft,
wobei der Datenverkehr Protokolldateneinheiten PDUs aufweist, wobei das Verfahren folgendes aufweist:

a) Erzeugen von ersten PDU-Identifikatoren von PDUs, welche an dem ersten Punkt beobachtet werden, und Erzeugen von entsprechenden ersten Zeitstempeln, welche Beobachtungszeiten der PDUs an dem ersten Punkt anzeigen;
b) Erzeugen von zweiten PDU-Identifikatoren von PDUs, welche an dem zweiten Punkt beobachtet werden, und Erzeugen von entsprechenden zweiten Zeitstempeln, welche Beobachtungszeiten der PDUs an dem zweiten Punkt anzeigen; und
c) Berechnen, aus ersten und zweiten Zeitstempeln mit passenden PDU-Identifikatoren, eines Schwankungsmaßes, welches eine Verzögerungsschwankung von PDUs zwischen den ersten und zweiten Punkten anzeigt, **dadurch gekennzeichnet, dass** der Schritt c) ferner folgendes aufweist:

c1) Berechnen von Differenzen zwischen ersten Zeitdifferenzen von ersten Zeitstempeln und zweiten Zeitdifferenzen von entsprechenden zweiten Zeitstempeln mit passenden PDU-Identifikatoren; und
c2) Berechnen des Schwankungsmaßes aus den Differenzen zwischen den ersten Zeitdifferenzen und den zweiten Zeitdifferenzen.

**2.** Das Verfahren nach Anspruch 1, wobei die PDUs Anwenderdatenverkehr aufweisen, der nicht zum Messen von Verzögerungsschwankung erzeugt wurde.

**3.** Das Verfahren nach Anspruch 1 oder 2, wobei das Verfahren nicht ein Ändern der PDUs mit sich bringt.

**4.** Das Verfahren nach einem der Ansprüche 1 bis 3, wobei die ersten und zweiten PDU-Identifikatoren auf der Grundlage von Charakteristiken der PDUs, die unveränderlich sind, wenn die PDUs das Netzwerk (12) zwischen den ersten und zweiten Punkten durchlaufen, berechnet werden.

5. Das Verfahren nach einem der Ansprüche 1 bis 4, das ferner folgendes aufweist:

 d) Identifizieren von gemeinsamen PDUs, welche an den ersten und zweiten Punkten beobachtet werden, durch Finden von passenden ersten und zweiten PDU-Identifikatoren und Erzeugen eines Satzes der ersten Zeitstempel und eines Satzes der zweiten Zeitstempel mit passenden PDU-Identifikatoren, wobei c) mit ersten bzw. zweiten Zeitstempeln von den gemeinsamen PDUs durchgeführt wird.

6. Das Verfahren nach einem der Ansprüche 1 bis 5, das ferner folgendes aufweist:

 d) Initiieren einer Messperiode zum Beobachten von PDUs durch Einfügen eines Markierersignals in Datenverkehr an dem ersten Punkt.

7. Das Verfahren nach einem der Ansprüche 1 bis 6, wobei ein Zeitbezugssystem der ersten Zeitstempel nicht mit einem Zeitbezugssystem der zweiten Zeitsstempel synchronisiert ist.

8. Das Verfahren nach einem der Ansprüche 1 bis 7, wobei die PDUs eine Teilmenge aller PDUs sind, welche an den ersten und zweiten Punkten beobachtet werden.

9. Das Verfahren nach einem der Ansprüche 1 bis 8, wobei das Schwankungsmaß eine Varianz oder eine Standardabweichung ist.

10. Das Verfahren nach einem der Ansprüche 1 bis 9, wobei a) - c) für PDUs durchgeführt werden, welche das Netzwerk (12) von den ersten und zweiten Punkten in beide Richtungen durchlaufen.

11. Das Verfahren nach einem der Ansprüche 1 bis 10, wobei die PDUs einen dritten Punkt zwischen den ersten und zweiten Punkten durchlaufen, wobei das Verfahren ferner folgendes aufweist:

 d) Erzeugen von dritten PDU-Identifikatoren von PDUs, welche an dem dritten Punkt beobachtet werden, und Erzeugen von entsprechenden dritten Zeitstempeln, welche Beobachtungszeiten der PDUs an dem dritten Punkt anzeigen; und
 e) Berechnen, aus ersten, zweiten und dritten Zeitstempeln mit passenden PDU-Identifikatoren, eines Schwankungsmaßes, welches eine Verzögerungsschwankung von PDUs zwischen Paaren der ersten, zweiten und dritten Punkte anzeigt.

12. Eine Vorrichtung zum Messen von Verzögerungsschwankung von Datenverkehr, der wenigstens erste und zweite Punkte auf einem Kommunikationsnetzwerk (12) durchläuft, wobei der Datenverkehr Protokolldateneinheiten PDUs aufweist, wobei die Vorrichtung folgendes aufweist:

 eine erste Sonde (A), die aufgebaut ist, um erste PDU-Identifikatoren von PDUs, die an dem ersten Punkt beobachtet werden, zu erzeugen, und um entsprechende erste Zeitstempel zu erzeugen, welche Beobachtungszeiten der PDUs an dem ersten Punkt anzeigen;
 eine zweite Sonde (B), die aufgebaut ist, um zweite PDU-Identifikatoren von PDUs, die an dem zweiten Punkt beobachtet werden, zu erzeugen, und um entsprechende zweite Zeitstempel zu erzeugen, welche Beobachtungszeiten der PDUs an dem zweiten Punkt anzeigen; und
 einen Prozessor (36), der aufgebaut ist, um aus ersten und zweiten Zeitstempeln mit passenden PDU-Identifikatoren ein Schwankungsmaß zu berechnen, das eine Verzögerungsschwankung der PDUs zwischen den ersten und zweiten Punkten anzeigt, **dadurch gekennzeichnet, dass**
 der Prozessor (36) aufgebaut ist, um Differenzen zwischen ersten Zeitdifferenzen von ersten Zeitstempeln und zweiten Zeitdifferenzen von entsprechenden zweiten Zeitstempeln mit passenden PDU-Identifikatoren zu berechnen, und ferner aufgebaut ist, um das Schwankungsmaß aus den Differenzen zwischen den ersten Zeitdifferenzen und den zweiten Zeitdifferenzen zu berechnen.

13. Die Vorrichtung nach Anspruch 12, wobei die erste Sonde (A) den Prozessor (36) aufweist.

**14.** Die Vorrichtung nach Anspruch 12 oder 13, wobei die zweite Sonde (B) den Prozessor (36) aufweist.

**15.** Die Vorrichtung nach einem der Ansprüche 12 bis 14, wobei der Prozessor (36) innerhalb einer Managementeinrichtung ist, welche verschieden von der ersten und zweiten Sonde (A, B) ist.

**16.** Die Vorrichtung nach einem der Ansprüche 12 bis 15, wobei die PDUs Anwenderdatenverkehr aufweisen, welcher nicht zum Messen von Verzögerungsschwankung erzeugt wurde.

**17.** Die Vorrichtung nach einem der Ansprüche 12 bis 16, wobei die ersten und zweiten Sonden (A, B) aufgebaut sind, um die PDUs nicht zu ändern.

**18.** Die Vorrichtung nach einem der Ansprüche 12 bis 17, wobei die ersten und zweiten Sonden (A, B) aufgebaut sind, um die ersten und zweiten PDU-Identifikatoren auf der Grundlage von Charakteristiken der PDUs, die unveränderlich sind, wenn die PDUs das Netzwerk (12) zwischen den ersten und zweiten Punkten durchlaufen, zu erzeugen.

**19.** Die Vorrichtung nach einem der Ansprüche 12 bis 18, wobei der Prozessor aufgebaut ist, um gemeinsame PDUs, die von den ersten und zweiten Sonden (A, B) beobachtet werden, zu identifizieren, und zwar durch Finden von passenden ersten und zweiten PDU-Identifikatoren, und ferner aufgebaut ist, um einen Satz der ersten Zeitstempel und einen Satz der zweiten Zeitstempel mit passenden PDU-Identifikatoren zu erzeugen, wobei Differenzberechnungen mit ersten bzw. zweiten Zeitstempeln von den gemeinsamen PDUs durchgeführt werden.

**20.** Die Vorrichtung nach einem der Ansprüche 12 bis 19, wobei die erste Sonde (A) aufgebaut ist, um eine Messperiode zum Beobachten von PDUs durch Einsetzen eines Markierersignals im Datenverkehr, welcher für die zweite Sonde (B) bestimmt ist, zu initiieren.

**21.** Die Vorrichtung nach einem der Ansprüche 12 bis 20, wobei die erste Sonde (A) aufgebaut ist, um die ersten Zeitstempel unter Verwendung eines ersten Zeitbezugsystems zu erzeugen, und wobei die zweite Sonde (B) aufgebaut ist, um die zweiten Zeitstempel unter Verwendung eines zweiten Zeitbezugsystems, das nicht mit dem ersten Zeitbezugsystem synchronisiert ist, zu erzeugen.

**22.** Die Vorrichtung nach einem der Ansprüche 12 bis 21, wobei die PDUs eine Teilmenge von allen PDUs, die von den ersten und zweiten Sonden (A, B) beobachtet werden, sind.

**23.** Die Vorrichtung nach einem der Ansprüche 12 bis 22, wobei das Schwankungsmaß eine Varianz oder Standardabweichung ist.

**24.** Die Vorrichtung nach einem der Ansprüche 12 bis 23, wobei die ersten und zweiten Sonden (A, B) aufgebaut sind, um das Schwankungsmaß für Datenverkehr, der in wenigstens einer Richtung durch das Netzwerk (12) transportiert wird, zu berechnen.

**25.** Die Vorrichtung nach einem der Ansprüche 12 bis 24, die ferner folgendes aufweist:

eine dritte Sonde an einem dritten Punkt zwischen den ersten und zweiten Sonden (A, B) in dem Netzwerk (12), wobei die dritte Sonde aufgebaut ist, um dritte PDU-Identifikatoren von PDUs, welche an einem dritten Punkt beobachtet werden, zu erzeugen, und um entsprechende dritte Zeitstempel, die Beobachtungszeiten der PDUs an dem dritten Punkt anzeigen, zu erzeugen;

wobei der Prozessor aufgebaut ist, um ein Schwankungsmaß aus ersten, zweiten und dritten Zeitstempeln mit passenden PDU-Identifikatoren zu berechnen, wobei ein Schwankungsmaß eine Verzögerungsschwankung von PDUs zwischen Paaren der ersten, zweiten und dritten Punkte anzeigt.

**Revendications**

**1.** Procédé de mesure d'une variation de retard de trafic de données traversant au moins des premier et deuxième points sur un réseau de communications (12), le trafic de données comportant des unités de données de protocole PDU, le procédé comportant les étapes consistant à :

a) générer des premiers identifiants PDU d'unités PDU observées au niveau du premier point et générer des premières estampilles temporelles correspondantes indiquant des temps d'observation des unités PDU au niveau du premier point ;

b) générer des deuxièmes identifiants PDU d'unités PDU observées au niveau du deuxième point et générer des deuxièmes estampilles temporelles correspondantes indiquant des temps d'observation des unités PDU au niveau du deuxième point ; et

c) calculer, à partir des premières et deuxièmes estampilles temporelles ayant des identifiants PDU concordants, une mesure de variation indiquant une variation de retard d'unités PDU entre les premier et deuxième points, **caractérisé en ce que** l'étape c) comporte en outre les sous-étapes consistant à :

c1) calculer des différences entre des premières différences temporelles de premières estampilles temporelles et des deuxièmes différences temporelles de deuxièmes estampilles temporelles correspondantes ayant des identifiants PDU concordants, et

c2) calculer la mesure de variation à partir des différences entre les premières différences temporelles et les deuxièmes différences temporelles.

2. Procédé selon la revendication 1, dans lequel les unités PDU comportent un trafic de données utilisateur non généré pour mesurer une variation de retard.

3. Procédé selon la revendication 1 ou 2, dans lequel le procédé n'implique pas de modifier les unités PDU.

4. Procédé selon l'une quelconque des revendications 1 à 3, dans lequel les premier et deuxième identifiants PDU sont calculés sur la base des caractéristiques des unités PDU qui sont invariantes lorsque les unités PDU traversent le réseau (12) entre les premier et deuxième points.

5. Procédé selon l'une quelconque des revendications 1 à 4, comportant en outre l'étape consistant à :

d) identifier les unités PDU communes observées au niveau des premier et deuxième points en détectant des premier et deuxième identifiants PDU concordants et générer un ensemble de premières estampilles temporelles et un ensemble de deuxièmes estampilles temporelles ayant des identifiants PDU concordants, l'étape c) étant exécutée à l'aide de premières et deuxièmes estampilles temporelles depuis les unités PDU communes, respectivement.

6. Procédé selon l'une quelconque des revendications 1 à 5, comportant en outre l'étape consistant à :

d) initier une période de mesure pour observer des unités PDU en insérant un signal de marquage dans le trafic de données au niveau du premier point.

7. Procédé selon l'une quelconque des revendications 1 à 6, dans lequel une trame de référence temporelle des premières estampilles temporelles n'est pas synchronisée avec une trame de référence temporelle des deuxièmes estampilles temporelles.

8. Procédé selon l'une quelconque des revendications 1 à 7, dans lequel les unités PDU sont un sous-ensemble de toutes les unités PDU observées au niveau des premier et deuxième points.

9. Procédé selon l'une quelconque des revendications 1 à 8, dans lequel la mesure de variation est une variance ou un écart standard.

10. Procédé selon l'une quelconque des revendications 1 à 9, dans lequel les étapes a)-c) sont exécutées pour les unités PDU traversant le réseau (12) depuis les premier et deuxième points dans les deux directions.

11. Procédé selon l'une quelconque des revendications 1 à 10, dans lequel les unités PDU traversent un troisième point entre les premier et deuxième points, le procédé comportant en outre les étapes consistant à :

d) générer des troisièmes identifiants PDU d'unités PDU observées au niveau du troisième point et générer des troisièmes estampilles temporelles correspondantes indiquant des temps d'observation des unités PDU au niveau du troisième point, et

e) calculer, à partir des premières, deuxièmes et troisièmes estampilles temporelles ayant des identifiants PDU concordants, une mesure de variation indiquant une variation de retard d'unités PDU entre des paires des premiers, deuxièmes et troisièmes points.

12. Dispositif pour mesurer une variation de retard de trafic de données traversant au moins des premier et deuxième points sur un réseau de communications (12), le trafic de données comportant des unités de données de protocole, PDU, le dispositif comportant :

une première sonde (A) configurée pour générer des premiers identifiants PDU d'unités PDU observées au niveau du premier point et pour générer des premières estampilles temporelles correspondantes indiquant des temps d'observation des unités PDU au niveau du premier point ;
une deuxième sonde (B) configurée pour générer des deuxièmes identifiants PDU d'unités PDU observées au niveau du deuxième point et pour générer des deuxièmes estampilles temporelles correspondantes indiquant des temps d'observation des unités PDU au niveau du deuxième point ; et
un processeur (36) configuré pour calculer, depuis les premières et deuxièmes estampilles temporelles ayant des identifiants PDU concordants, une mesure de variation indiquant une variation de retard d'unités PDU entre les premier et deuxième points,
**caractérisé en ce que**
ledit processeur (36) est configuré pour calculer des différences entre des premières différences temporelles de premières estampilles temporelles et des deuxièmes différences temporelles de deuxièmes estampilles temporelles correspondantes ayant des identifiants PDU concordants, et est en outre configuré pour calculer la mesure de variation à partir des différences entre les premières différences temporelles et les deuxièmes différences temporelles.

13. Dispositif selon la revendication 12, dans lequel la première sonde (A) inclut le processeur (36).

14. Dispositif selon la revendication 12 ou 13, dans lequel la deuxième sonde (B) inclut le processeur (36) .

15. Dispositif selon l'une quelconque des revendications 12 à 14, dans lequel le processeur (36) est compris dans un dispositif de gestion autre que les première et deuxième sondes (A, B).

16. Dispositif selon l'une quelconque des revendications 12 à 15, dans lequel les unités PDU comportent un trafic de données utilisateur non généré pour mesurer une variation de retard.

17. Dispositif selon l'une quelconque des revendications 12 à 16, dans lequel les première et deuxième sondes (A, B) sont configurées pour ne pas modifier les unités PDU.

18. Dispositif selon l'une quelconque des revendications 12 à 17, dans lequel les première et deuxième sondes (A, B) sont configurées pour générer les premier et deuxième identifiants PDU sur la base des caractéristiques des unités PDU qui sont invariantes lorsque les unités PDU traversent le réseau (12) entre les premier et deuxième points.

19. Dispositif selon l'une quelconque des revendications 12 à 18, dans lequel le processeur est configuré pour identifier les unités PDU communes observées par les première et deuxième sondes (A, B) en détectant des premier et deuxièmes identifiants concordants, et est en outre configuré pour générer un ensemble de premières estampilles temporelles et un ensemble de deuxièmes estampilles temporelles ayant des identifiants PDU concordants, des calculs de différence étant exécutés respectivement à l'aide des premières et deuxièmes estampilles temporelles à partir des unités PDU communes.

20. Dispositif selon l'une quelconque des revendications 12 à 19, dans lequel la première sonde (A) est configurée pour initier une période de mesure pour observer des unités PDU en insérant un signal de marquage dans un trafic de données associé à la deuxième sonde (B).

21. Dispositif selon l'une quelconque des revendications 12 à 20, dans lequel la première sonde (A) est configurée pour générer les premières estampilles temporelles en utilisant une première trame de référence temporelle et la deuxième sonde (B) est configurée pour générer les deuxièmes estampilles temporelles en utilisant une seconde trame de référence temporelle qui n'est pas synchronisée avec la première trame de référence temporelle.

22. Dispositif selon l'une quelconque des revendications 12 à 21, dans lequel les unités PDU sont un sous-ensemble de toutes les unités PDU observées par les première et deuxième sondes (A, B).

**23.** Dispositif selon l'une quelconque des revendications 12 à 22, dans lequel la mesure de variation est une variance ou un écart standard.

**24.** Dispositif selon l'une quelconque des revendications 12 à 23, dans lequel les première et deuxième sondes (A, B) sont configurées pour calculer la mesure de variation pour un trafic de données transporté dans au moins une direction à travers le réseau (12).

**25.** Dispositif selon l'une quelconque des revendications 12 à 24, comportant en outre :

une troisième sonde au niveau d'un troisième point entre les première et deuxième sondes (A, B) dans le réseau (12), la troisième sonde étant configurée pour générer des troisièmes identifiants PDU concordants d'unités PDU observées au niveau du troisième point et pour générer des troisièmes estampilles temporelles correspondantes indiquant des temps d'observation des unités PDU au niveau du troisième point ;

dans lequel le processeur est configuré pour calculer une mesure de variation, à partir des premières, deuxièmes et troisièmes estampilles temporelles ayant des identifiants PDU concordants, une mesure de variation indiquant une variation de retard d'unités PDU entre des paires des premier, deuxième et troisième points.

FIG.1

30

32

PDU I/O
CONTROLLER

34

MEMORY

36

PROCESSOR

FIG.2

INITIATE TEST — 40

COMPUTE FIRST PDU IDs AND TIMESTAMPS FOR PDUs OBSERVED AT FIRST PROBE — 42

COMPUTE SECOND PDU IDs AND TIMESTAMPS FOR PDUs OBSERVED AT SECOND PROBE — 44

FORWARD PDU IDs AND TIMESTAMPS TO COMMON PROCESSOR — 46

IDENTIFY COMMON PDUs OBSERVED BY BOTH PROBES BY FINDING MATCHING FIRST AND SECOND PDU IDs AND, FROM IDENTIFIED COMMON PDUs, GENERATE A LIST OF FIRST TIMESTAMPS FROM THE FIRST PROBE, AND A CORRESPONDING LIST OF SECOND TIMESTAMPS FROM THE SECOND PROBE HAVING MATCHING PDU IDs — 48

COMPUTE FIRST TIME DIFFERENCES $\Delta T1_i$ FROM THE FIRST TIMESTAMPS AND SECOND TIME DIFFERENCES $\Delta T2_i$ FROM THE SECOND TIMESTAMPS — 50

COMPUTE DIFFERENCES BETWEEN $\Delta T1_i$ AND CORRESPONDING $\Delta T2_i$ HAVING MATCHING PDU IDs — 52

COMPUTE A MEASURE OF VARIATION FROM THE DIFFERENCES BETWEEN THE FIRST TIME DIFFERENCES $\Delta T1_i$ AND THE SECOND TIME DIFFERENCES $\Delta T2_i$ — 54

FIG.3

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9634476 A
- EP 0786883 A1

- EP 1130850 A2

**Non-patent literature cited in the description**

- A simple method of estimating mean delay by counting arrivals and departures. *NETWORKING: FOUNDATION FOR THE FUTURE. SAN FRANCISCO, MAR. 28 - APR. 1, 1993, PROCEEDINGS OF THE ANNUAL JOINT CONFERENCE OF THE COMPUTER AND COMMUNICATIONS SOCIETIES (INFOCOM), LOS ALAMITOS, IEEE COMP. SOC. PRESS,* 28 March 1993, vol. 2, 829-834